# EUROPÄISCHE PATENTSCHRIFT

(11) **EP 3 071 472 B1**
(45) Veröffentlichungstag und Bekanntmachung des Hinweises auf die Patenterteilung: **18.03.2020**
(21) Anmeldenummer: 14781542.7
(22) Anmeldetag: 07.10.2014
(51) Int. Cl.: B62D 35/02

(54) **KÜHLLUFTFÜHRUNG FÜR EINE REIBBELAGBREMSE EINES KRAFTFAHRZEUGS**
COOLING AIR GUIDE FOR A FRICTION LINING BRAKE OF A MOTOR VEHICLE
GUIDE D'AIR DE REFROIDISSEMENT POUR FREIN À GARNITURE DE FRICTION D'UN VÉHICULE AUTOMOBILE

(30) Priorität: 20.11.2013 DE 102013223668
(43) Veröffentlichungstag der Anmeldung: 28.09.2016
(73) Patentinhaber: Bayerische Motoren Werke Aktiengesellschaft, 80809 München (DE)
(72) Erfinder: MAUCH, Holger, 82256 Fuerstenfeldbruck (DE); FAULWASSER, Michael, 80939 München (DE); LEICHT, Rasmus, 85386 Eching (DE); WAGNER, Oliver, 80799 München (DE); VACZI, Tobias, 80995 München (DE); LINDENMÜLLER, Wolfgang, 82216 Maisach (DE); WESTPHALEN, Jan, 85764 Oberschleissheim (DE)
(86) Internationale Anmeldenummer: PCT/EP2014/071465
(87) Internationale Veröffentlichungsnummer: WO 2015/074800

(56) Entgegenhaltungen:
- EP-A1- 0 331 888
- DE-A1- 1 555 186
- DE-A1- 3 803 801
- DE-A1- 4 114 761
- DE-A1- 10 024 219
- DE-A1-102011 052 175
- DE-A1-102011 056 161
- DE-C1- 3 942 651
- DE-C1- 19 546 064
- DE-C1- 19 943 536
- JP-A- S55 142 131
- JP-A- 2010 132 208

## Beschreibung

Die Erfindung betrifft eine Kühlluftführung für eine Reibbelagbremse eines Kraftfahrzeugs, das einen Radträger und eine am Radträger angebundene Radnabe aufweist, wobei die Reibbelagbremse einen an der Radnabe des Kraftfahrzeugs angebundenen Bremskörper mit Reibflächen, insbesondere eine Bremsscheibe, und eine auf der Innenseite des Bremskörpers angeordnete und ortsfest zum Radträger befestigte Bremsenabdeckung aufweist, wobei die Bremsenabdeckung eine erste Luftleiteinrichtung der Kühlluftführung bildet, und wobei die Kühlluftführung eine zweite Luftleiteinrichtung aufweist, die auf einer von dem Bremskörper abgewandten Seite der Bremsenabdeckung angeordnet ist und ortsfest zur Bremsenabdeckung befestigt ist. Dabei ist die zweite Luftleiteinrichtung derart ausgebildet, dass von vorne einströmende Kühlluft, bezogen auf eine Fahrzeuglängsrichtung, durch die zweite Luftleiteinrichtung nach fahrzeugaußen zur ersten Luftleiteinrichtung und von dort durch Zusammenwirken der ersten Luftleiteinrichtung mit der zweiten Luftleiteinrichtung weiter nach fahrzeugaußen zum Bremskörper geleitet wird.

Kühlluftführungen für Reibbelagbremsen mit Luftleiteinrichtungen zur Verbesserung der konvektiven Kühlung des Bremskörpers, insbesondere zur Verbesserung der konvektiven Kühlung von Bremsscheiben, sind aus dem Stand der Technik allgemein bekannt, beispielsweise aus der EP 0 331 888 A1, der DE 39 42 651 C1, der DE 196 02 838 B4, der DE 699 11 435 T2, der JP S55 142131 A, der DE 100 24 219 A1, der DE 41 14 761 A1, der DE-OS 1 555 186 oder der DE 38 03 801 A1.

Aus der EP 0 331 888 A1 ist beispielsweise eine Kühlluftführung zum Kühlen von Radbremsen eines Kraftfahrzeugs bekannt, die eine Luftleiteinrichtung mit einem entgegen dem ankommenden Luftstrom angestellten, profilierten Umlenkelement aufweist, das dazu ausgebildet ist, den ankommenden Luftstrom der Bremsscheibe zuzuleiten, wobei die Vorderfläche des Umlenkelements in einer etwa vertikalen Ebene ausgerichtet ist und am Radlenker gehalten wird.

Bei der in der DE 39 42 651 C1 beschriebenen Kühlluftführung weist eine an einer Fahrzeuginnenseite zur Bremsscheibe hin angeordnete Bremsenabdeckung einen axial verlaufenden Luftleitfortsatz auf, an dem ein radial abstehender Umfangsflansch ausgebildet ist, der sich bis nahe zur innenliegenden Wandung des Bremsscheibentopfes erstreckt. In radialer Richtung außerhalb des Luftleitfortsatzes weist die Bremsenabdeckung ferner eine bogenförmige Luftdurchgangsöffnung auf. Bei Fahrzeugfahrt entsteht an der Bremsenabdeckung durch Staudruckwirkung ein Luftüberdruck, der durch die Luftdurchgangsöffnung in axialer Richtung längs des Luftleitvorsatzes strömt und im Bereich des Umfangsflanschs in radialer Richtung zur Kühlung der Bremsscheibe umgelenkt wird.

Die in der DE 196 02 838 B4 beschriebene Kühlluftführung für eine Bremsscheibe eines Fahrzeugs weist ein koaxial zur Mittelachse der Bremsscheibe angeordnetes Lüfterrad auf, das eine mit dem Fahrzeugrad rotierende Tragstruktur aufweist, d.h. das mit dem Fahrzeugrad mit dreht. Das Lüfterrad weist Luftleitelemente in Form von Schaufeln auf, die jeweils unterschiedlichen Bereichen der Bremsscheibe kühle Luft zuführen wobei das Lüfterrad dabei Luftleitelemente aufweist, die dem Inneren der Bremsscheibe kühle Luft zuführen und Luftleitelemente, welche der Außenseite der Bremsscheiben kühle Luft zuführen.

Aus der DE 699 11 435 T2 ist eine Kühlluftführung für eine Scheibenbremse eines Kraftfahrzeugs mit einem am Radträger angebrachten Kühlkanal bekannt, bei welchem durch eine Drehung des Rades bewirkt wird, dass Luft durch den Kühlkanal zur Bremsscheibe strömt.

Aus der JP S55 142131 A, der DE 100 24 219 A1, der DE 41 14 761 A1 und der DE 38 03 801 A1 sind jeweils Kühlluftführungen mit zwei zusammenwirkenden Luftleiteinrichtungen bekannt.

Die vorbeschriebenen, bekannten Kühlluftführungen können jedoch in vielen Fällen nicht vorteilhaft eingesetzt werden, da sie entweder keine von einem Einfederungszustand des Rades unabhängige Kühlluftzufuhr gewährleisten können, das Schwingverhalten der Bremsenabdeckung, insbesondere die Schwingfestigkeit, nachteilig beeinflussen, aufwendig ausgestaltet sind oder einen zu großen Bauraumbedarf haben.

Aufgabe der Erfindung ist es somit, eine Kühlluftführung für eine Reibbelagbremse eines Kraftfahrzeugs bereitzustellen, welche, ohne das Schwingverhalten der Bremsenabdeckung nachteilig zu beeinflussen bzw. ohne sich nachteilig auf die Festigkeit der Bremsenabdeckung auszuwirken, eine verbesserte Kühlluftzufuhr zum Bremskörper einer Reibbelagbremse ermöglicht, aber gleichzeitig wenig Bauraum erfordert und einfach ausgestaltet ist.

Gelöst wird diese Aufgabe durch eine Kühlluftführung mit den Merkmalen von Anspruch 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Eine erfindungsgemäße Kühlluftführung ist dadurch gekennzeichnet, dass die zweite Luftleiteinrichtung am Radträger befestigt ist.

Durch eine erfindungsgemäße Kühlluftführung mit einer erfindungsgemäß ausgestalteten, zweiten Luftleiteinrichtung kann die konvektive Kühlung des Bremskörpers einer Reibbelagbremse gegenüber einer Kühlluftführung mit nur einer Luftleiteinrichtung, die durch die Bremsenabdeckung gebildet wird, deutlich verbessert werden.

Durch die ortsfeste Anordnung der ersten Luftleiteinrichtung und der zweiten Luftleiteinrichtung am Radträger sind die Luftleiteinrichtungen auch ortsfest zum Bremskörper der Reibbelagbremse angeordnet, und damit unabhängig von einem Ein- bzw. Ausfederungszustand. Denn die erste und die zweite Luftleiteinrichtung folgen beim Ein- bzw. Ausfedern der Einfederungsbewegung von Rad und Bremskörper, was sich vorteilhaft auf die Strömungsverhältnisse am Bremskörper auswirkt, insbesondere weil dadurch eine möglichst gleichmäßige und stabile Kühlluftzufuhr zum Bremskörper gewährleistet werden kann. Insbesondere bewirkt die ortsfeste Anordnung der beiden Luftleiteinrichtungen zum Radträger eine ortsfeste Anordnung der beiden Luftleiteinrichtungen zueinander, so dass vor allem zwischen der zweiten Luftleiteinrichtung und der ersten Luftleiteinrichtung stabile Strömungsverhältnisse hergestellt bzw. ausgebildet werden können. Dadurch kann insbesondere eine gleichmäßige und stabile Kühlluftströmung von der zweiten Luftleiteinrichtung zur ersten Luftleiteinrichtung sichergestellt werden.

Bevorzugt wirken die erste Luftleiteinrichtung und die zweite Luftleiteinrichtung dabei derart zusammen, dass von der auf einer Innenseite der Bremsenabdeckung angeordneten, zweiten Luftleiteinrichtung zur Bremsenabdeckung geleitete Kühlluft an der ersten Luftleiteinrichtung und damit an der Bremsenabdeckung vorbei und/oder durch diese hindurch weiter zum Bremskörper geleitet wird, wobei die Kühlluft besonders bevorzugt unter der Bremsenabdeckung hindurch oder durch Öffnungen in der Bremsenabdeckung weiter zum Bremskörper geleitet wird. Für eine besonders effiziente Kühlluftverteilung am Bremskörper weist die Bremsenabdeckung besonders bevorzugt entsprechende Öffnungen und/oder Luftleitfortsätze auf, wie beispielsweise die in der DE 39 42 651 C1 beschriebene Bremsenabdeckung.

Bevorzugt ist die zweite Luftleiteinrichtung ein von der Bremsenabdeckung separates Bauteil. Dadurch kann eine Kühlluftführung für eine Reibbelagbremse eines Kraftfahrzeugs mit einer deutlich verbesserten konvektiven Kühlung des Bremskörpers bereitgestellt werden, ohne dass Modifikationen an der Bremsenabdeckung erforderlich sind, welche in der Regel zu Spannungserhöhungen an der Bremsenabdeckung führen oder das Schwingungsverhalten der Bremsenabdeckung negativ beeinflussen, was zu einer verringerten Lebensdauer der Bremsenabdeckung führen kann.

Die Verwendung eines zusätzlichen Bauteils, das heißt einer zweiten Luftleiteinrichtung, welche von der ersten Luftleiteinrichtung separat ausgeführt ist, hat ferner den Vorteil, dass standardmäßig eine herkömmliche Bremsenabdeckung verwendet werden kann und die zweite Luftleiteinrichtung nur in Fahrzeugen eingebaut werden muss, welche eine höhere Bremsenkühlung benötigen. Ein genereller Verbau oder Vorhalt anderer Teile ist somit nicht erforderlich.

Mit der erfindungsgemäßen Kühlluftführung kann somit eine Kühlluftführung für eine Reibbelagbremse eines Kraftfahrzeugs bereitgestellt werden, welche ohne das Schwingverhalten der Bremsenabdeckung nachteilig zu beeinflussen bzw. ohne sich nachteilig auf die Festigkeit der Bremsenabdeckung auszuwirken, eine verbesserte Kühlluftzufuhr zum Bremskörper einer Reibbelagbremse ermöglicht, aber gleichzeitig wenig Bauraum erfordert und einfach ausgestaltet ist. Die zweite Luftleiteinrichtung einer erfindungsgemäßen Kühlluftführung kann einfach nachgerüstet werden und ist flexibel einsetzbar bei Fahrzeugen, welche eine verbesserte Bremsenkühlung benötigen.

In einer bevorzugten Ausgestaltung erstreckt sich die zweite Luftleiteinrichtung in Fahrzeugquerrichtung in Richtung fahrzeugaußen bis nahe an die Bremsenabdeckung heran, wobei die zweite Luftleiteinrichtung sich dabei besonders bevorzugt so nah bis an die Bremsenabdeckung heran erstreckt, dass möglichst keine Kühlluft zwischen der zweiten Luftleiteinrichtung und der Bremsenabdeckung entlang der Bremsenabdeckung radial nach außen bzw. radial nach außen und/oder oben strömt. Je dichter sich die zweite Luftleiteinrichtung an die erste Luftleiteinrichtung heran erstreckt bzw. je besser verhindert werden kann, dass Kühlluft zwischen der zweiten Luftleiteinrichtung und der Bremsenabdeckung entlang der Bremsenabdeckung radial nach außen bzw. radial nach außen und/oder oben strömt, d.h. je besser der Spalt zwischen der ersten und der zweiten Kühlluftführung "abgedichtet" ist, desto mehr Kühlluft kann dem Bremskörper zugeführt werden, d.h. desto mehr kann die Kühlleistung mittels der zweiten Luftleiteinrichtung gesteigert werden.

In einigen Fällen kann es erforderlich sein, dass sich die zweite Luftleiteinrichtung in Fahrzeugquerrichtung soweit wie möglich nach fahrzeuginnen erstreckt. Infolgedessen kann es bei Federbein-Achsen erforderlich sein, dass sich die zweite Luftleiteinrichtung in Fahrzeugquerrichtung in Richtung fahrzeuginnen fast bis an das Federbein heran erstreckt. Grundsätzlich gilt: je weiter sich die zweite Luftleiteinrichtung in Fahrzeugquerrichtung nach fahrzeuginnen erstreckt, d.h. je breiter die zweite Luftleiteinrichtung ausgebildet ist, desto mehr Kühlluft kann dem Bremskörper zugeführt werden, wodurch wiederum die Kühlleistung gesteigert werden kann. Allerdings kann sich dies unter Umständen nachteilig auf den Luftwiderstand auswirken.

In einer bevorzugten Ausgestaltung der Kühlluftführung weist die zweite Luftleiteinrichtung eine schaufel- und oder bogenförmige, insbesondere eine im Wesentlichen C- oder L-förmige, Haupt-Luftleitfläche auf, die sich zum einen in Fahrzeugquerrichtung und zum anderen zumindest teilweise bogenförmig, insbesondere im Wesentlichen C- oder L-förmig, wenigstens im Bereich eines Umfangssektors um eine Radachse herum erstreckt. D.h. mit anderen Worten erstreckt sich die Haupt-Luftleitfläche bevorzugt zum einen in Fahrzeugquerrichtung und zum anderen umgreift sie bevorzugt wenigstens teilweise bogenförmig die Radachse, insbesondere C- oder L-förmig. Die bogenförmige bzw. die C- oder L-förmige Ausgestaltung der Haupt-Luftleitfläche der zweiten Luftleiteinrichtung ermöglicht eine besonders effiziente Kühlluftführung, denn dadurch kann bei entsprechender Anordnung der zweiten Luftleiteinrichtung ein effizientes Umlenken der von vorne einströmenden Kühlluft zur Bremsenabdeckung bzw. der ersten Luftleiteinrichtung hin, erreicht werden und ein Abströmen ungenutzter Kühlluft in Fahrzeuglängsrichtung nach hinten verhindert werden.

Besonders bevorzugt ist die zweite Luftleiteinrichtung dabei derart angeordnet, dass die Haupt-Luftleitfläche mit einem Abstand um die Radachse herum verläuft bzw. beabstandet zur Radachse angeordnet ist, so dass mittels der zweiten Luftleiteinrichtung möglichst viel Kühlluft gesammelt und weiter zur ersten Luftleiteinrichtung geführt werden kann.

Bevorzugt ist die zweite Luftleiteinrichtung derart angeordnet, dass sich eine vordere Anströmkante der Haupt-Luftleitfläche, bezogen auf einen funktionsgemäßen, montierten Zustand der erfindungsgemäßen Kühlluftführung in einem Kraftfahrzeug, oberhalb der Radachse befindet. Als Anströmkante wird dabei die Kante der zweiten Luftleiteinrichtung bezeichnet, mit welcher von vorne einströmende Kühlluft zuerst in Kontakt gebracht wird, d.h. die Kante der zweiten Luftleiteinrichtung, die zuerst angeströmt wird bzw. welche die vorderste Kante der Fläche der zweiten Luftleiteinrichtung bildet, die zuerst angeströmt wird. Die vordere Anströmkante kann in Fahrzeuglängsrichtung in einer Ebene mit der Radachse liegen oder vor der Radachse oder hinter der Radachse. Bevorzugt befindet sich die vordere Anströmkante jedoch vor der Radachse bezogen auf die Fahrzeuglängsrichtung, insbesondere vor der Radachse und oberhalb von der Radachse, d.h. neben bzw. auf der Höhe eines vorne liegenden Sektors des Bremskörpers, insbesondere auf der Höhe eines oberhalb der Radachse und vor der Radachse liegenden Sektors des Bremskörpers. In einigen Fällen kann es aber auch vorteilhaft sein, wenn sich die Anströmkante unterhalb von der Radachse befindet.

Besonders bevorzugt erstreckt sich die Haupt-Luftleitfläche in Umfangsrichtung um die Radachse herum von einem Bereich vor und oberhalb der Radachse bis wenigstens in einen Bereich hinter und unterhalb der Radachse bezogen auf einen funktionsgemäßen Einbauzustand in einem Fahrzeug in Strömungsrichtung der Kühlluft, d.h. die Haupt-Luftleiteinrichtung umgreift die Radachse bevorzugt wenigstens teilweise oberhalb und dahinter. Die Haupt-Luftleitfläche kann sich aber auch in Umfangsrichtung um die Radachse herum von einem Bereich vor und unterhalb der Radachse bis wenigstens in einen Bereich hinter und oberhalb der Radachse erstrecken, d. h. in einer alternativen Ausgestaltung kann die zweite Luftleiteinrichtung die Radachse zumindest teilweise unterhalb umgreifen. Es ist auch denkbar, dass die Haupt-Luftleitfläche die Radachse sowohl oberhalb und unterhalb umgreift, wobei die Haupt-Luftleitfläche dazu beispielsweise die Form eines fast geschlossenen "C" haben kann. Die Fläche und Form der Haupt-Luftleitfläche der zweiten Luftleiteinrichtung sollte dabei in jedem Fall so gewählt werden, dass möglichst viel Kühlluft gesammelt und zur ersten Luftleiteinrichtung geführt werden kann, ohne dass der Luftwiderstand bei funktionsgemäßem Einbau in einem Fahrzeug nennenswert erhöht wird.

Besonders bevorzugt ist die zweite Luftleiteinrichtung derart ausgebildet bzw. in einem funktionsgemäßen Einbauzustand der erfindungsgemäßen Kühlluftführung angeordnet, dass sie von der von vorne einströmenden Kühlluft tangential angeströmt werden kann, wobei besonders bevorzugt die Haupt-Luftleitfläche über die vordere Anströmkante tangential angeströmt werden kann.

In einer vorteilhaften Ausgestaltung ist die zweite Luftleiteinrichtung derart angeordnet bzw. ausgebildet, dass die vordere Anströmkante der Haupt-Luftleitfläche in einem funktionsgemäßen Einbauzustand zur Bremsenabdeckung hin schräg nach fahrzeugaußen unten verläuft, wobei sich die Neigung der Anströmkante in Fahrzeugquerrichtung im Wesentlich durch die Position bzw. die Höhe eines fahrzeuginnenseitigen Endes der Anströmkante und eines fahrzeugaußenseitigen Endes der vorderen Anströmkante ergibt. Die Position bzw. die Höhe des fahrzeugaußenseitigen Endes der vorderen Anströmkante sollte derart gewählt sein, dass im Übergangsbereich von der zweiten Luftleiteinrichtung zur ersten Luftleiteinrichtung möglichst wenig Strömungsverluste auftreten, d.h. dass der Strömungsweg von der zweiten Luftleiteinrichtung zur ersten Luftleiteinrichtung möglichst kurz sein sollte, damit möglichst keine Kühlluft auf der Innenseite der Bremsenabdeckung nach oben oder hinten ungenutzt abströmen kann, und dass möglichst viel Kühlluft direkt von der zweiten Luftleiteinrichtung zur ersten Luftleiteinrichtung und weiter zum Bremskörper geleitet wird. Durch eine geeignete Position und Ausgestaltung des fahrzeugaußenseitigen Endes der Anströmkante kann eine effiziente Umlenkung der Kühlluft zur ersten Luftleiteinrichtung bzw. zur Bremsenabdeckung erreicht werden.

Die Position bzw. die Höhe des fahrzeuginnenseitigen Endes der vorderen Anströmkante sollte dabei derart gewählt sein, dass ausreichend bzw. möglichst viel Kühlluft durch die zweite Luftleiteinrichtung "gesammelt" und zur ersten Luftleiteinrichtung geführt werden kann. D.h. das fahrzeuginnenseitige Ende der Anströmkante befindet sich bevorzugt derart weit innen oben, dass ein möglichst großer Kühlluftmassenstrom bzw. der erforderliche Kühlluftmassenstrom durch die zweite Luftleiteinrichtung "gesammelt" werden kann. Insbesondere bei größeren erforderlichen Kühlluftmassenströmen ist eine in einem funktionsgemäßen Einbauzustand schräg nach fahrzeugaußen unten verlaufende vordere Anströmkante vorteilhaft, da auf diese Weise sowohl ein möglichst großer Kühlluftmassenstrom "gesammelt" werden kann als auch eine effiziente Umlenkung der Kühlluft von der zweiten Luftleiteinrichtung zur ersten Luftleiteinrichtung erreicht werden kann. In einigen Fällen kann jedoch bereits ein im Wesentlichen waagerechter Verlauf der vorderen Anströmkante ausreichend sein.

In einer Weiterbildung der erfindungsgemäßen Kühlluftführung weist die zweite Luftleiteinrichtung wenigstens eine an die Haupt-Luftleitfläche angrenzende Neben-Luftleitfläche auf, wobei die Neben-Luftleitfläche besonders bevorzugt an einer der Bremsenabdeckung zugewandten Seite der Haupt-Luftleitfläche an die Haupt-Luftleitfläche angrenzt. Durch die Anordnung einer Neben-Luftleitfläche angrenzend an die fahrzeugaußenseitige, der Bremsenabdeckung zugewandten Seite der Haupt-Luftleitfläche kann die Effizienz der Strömungsumlenkung von der zweiten Luftleiteinrichtung zur ersten Luftleiteinrichtung deutlich verbessert werden. Insbesondere kann auf diese Weise sehr effizient verhindert werden, dass Kühlluft zwischen der zweiten Luftleiteinrichtung und der ersten Luftleiteinrichtung radial nach außen bzw. radial nach außen und/oder oben strömt, d.h. die "Abdichtung" zwischen der zweiten Luftleiteinrichtung und der ersten Luftleiteinrichtung kann durch eine entsprechend ausgestaltete fahrzeugau-ßenseitige Neben-Luftleitfläche deutlich verbessert werden.

Die zweite Luftleiteinrichtung kann alternativ oder zusätzlich auch eine an einer zur Fahrzeuginnenseite hin zugewandten Seite der Haupt-Luftleitfläche angrenzende Neben-Luftleitfläche aufweisen, d.h. an der von der Bremsenabdeckung abgewandten Seite der Haupt-Luftleitfläche. Besonders bevorzugt weist die zweite Luftleiteinrichtung jedoch jeweils eine an der fahrzeuginnenseitigen und der fahrzeugaußenseitigen Seite der Haupt-Luftleitfläche angrenzende Neben-Luftleitfläche auf, da dadurch auch Kühlluftströmungsverluste sowohl im Übergangsbereich zur ersten Luftleiteinrichtung als auch nach fahrzeuginnen reduziert werden können.

In einer bevorzugten Ausgestaltung der Erfindung wird die Neben-Luftleitfläche durch einen sich zumindest teilweise radial nach innen erstreckenden Flansch oder Rand gebildet, besonders bevorzugt durch einen sich schräg radial nach innen erstreckenden Flansch oder Rand, d.h. einen sich im Wesentlichen zur Radachse hin erstreckenden Flansch oder Rand, und axial von der Haupt-Luftleitfläche weg erstreckendem Flansch oder Rand. Bevorzugt erstreckt sich die Neben-Luftleitfläche dabei bei einer an der fahrzeugaußenseitigen Neben-Luftleitfläche, d.h. bei einer der Bremsenabdeckung zugewandten Neben-Luftleitfläche leicht schräg nach außen von der Haupt-Luftleitfläche weg, d.h. leicht schräg nach fahrzeugaußen zur Bremsenabdeckung hin, bezogen auf einen funktionsgemäßen Einbauzustand der erfindungsgemäßen Kühlluftführung in einem Fahrzeug. Bei einer fahrzeuginnenseitigen Neben-Luftleitfläche erstreckt sich der Flansch oder Rand bevorzugt entsprechend nach fahrzeuginnen von der Haupt-Luftleitfläche weg.

In einigen Fällen ist es vorteilhaft, wenn die Neben-Luftleitfläche mit der Haupt-Luftleitfläche einen Winkel von ca. 120 Grad einschließt. Die Haupt-Luftleitfläche geht dabei vorzugsweise mit einem Radius in die Neben-Luftleitfläche über. Dies ist aus fertigungstechnischer Sicht vorteilhaft. Ferner ist der Radius bevorzugt so groß gewählt bzw. der Übergang derart weich ausgebildet, dass die Kühlluftströmung möglichst wenig verlustbehaftet von der Haupt-Luftleitfläche zur Neben-Luftleitfläche geleitet werden kann.

Bevorzugt weist dazu entweder der die zweite Luftleiteinrichtung aufnehmende bzw. tragende Radträger oder die zweite Luftleiteinrichtung selbst wenigstens eine Ausnehmung zur Befestigung auf, vorzugsweise eine Durchgangsbohrung, und die zweite Luftleiteinrichtung oder der Radträger wenigstens ein entsprechendes Befestigungsmittel, das korrespondierend zu der Ausnehmung ausgebildet ist.

Die zweite Luftleiteinrichtung kann beispielsweise mit Hilfe von Clipsen, Kabelbindern oder Schellen, insbesondere Metallschellen, oder über eine gesicherte Bolzensteckverbindung am Radträger befestigt sein.

Eine gesicherte Bolzensteckverbindung weist bevorzugt einen Bolzen auf, der von einer Eingangsseite durch eine Ausnehmung gesteckt bzw. geführt ist und auf einer Ausgangsseite der Ausnehmung gesichert ist, wobei der Bolzen beispielsweise mittels eines Splints, einer Mutter oder dergleichen gesichert sein kann. Der Bolzen kann in diesem Fall beispielsweise ein Gewindebolzen sein, der von der Eingangsseite durch die Ausnehmung hindurch geführt bzw. gesteckt ist und auf der Ausgangsseite der Ausnehmung vorzugsweise mit einer Mutter, insbesondere mit einer primären Mutter und einer sekundären Kontermutter, gesichert ist.

Die Bolzensteckverbindung kann aber als auch selbstsichernde Bolzensteckverbindung ausgebildet sein, wobei dazu bevorzugt ein Bolzen, der besonders bevorzugt entsprechende Selbstsicherungsmittel aufweist, wie beispielsweise Widerhaken oder dergleichen, in die Ausnehmung hinein oder durch die Ausnehmung hindurch gesteckt ist. Eine solche selbstsichernde Bolzensteckverbindung mit selbstsichernden Bolzen hat sich insbesondere als vorteilhaft und kostengünstig erwiesen, um Luftleiteinrichtungen aus Kunststoff am Radträger zu befestigen. Da bei Luftleiteinrichtungen aus Kunststoff, insbesondere bei Luftleiteinrichtungen, die im Spritzgussverfahren hergestellt werden, die Bolzen während der Herstellung einstückig angeformt bzw. angegossen werden können, können derartige Luftleiteinrichtungen aus Kunststoff besonders kostengünstig hergestellt werden.

In einer vorteilhaften Ausgestaltung weist die zweite Luftleiteinrichtung an ihrer Rückseite wenigstens ein Versteifungselement auf, wobei das Versteifungselement vorzugsweise eine Versteifungsrippe ist, insbesondere eine zumindest teilweise in Strömungsrichtung verlaufende Versteifungsrippe. Durch derartige Versteifungselemente, insbesondere durch in Anströmrichtung bzw. in Strömungsrichtung verlaufende Versteifungsrippen, kann auf einfache Art und Weise wirkungsvoll die Schwingungsanregung der zweiten Luftleiteinrichtung vermieden werden, insbesondere die Schwingungsanregung durch die Kühlluftströmung.

Des Weiteren kann die zweite Luftleiteinrichtung zur Befestigung und/oder Führung von Kabeln oder dergleichen ausgebildet sein, beispielsweise zur Befestigung oder Führung der Kabel eines Raddrehzahlsensors oder des Bremsbelagverschleißanzeigesensors.

Diese und weitere Merkmale gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird.

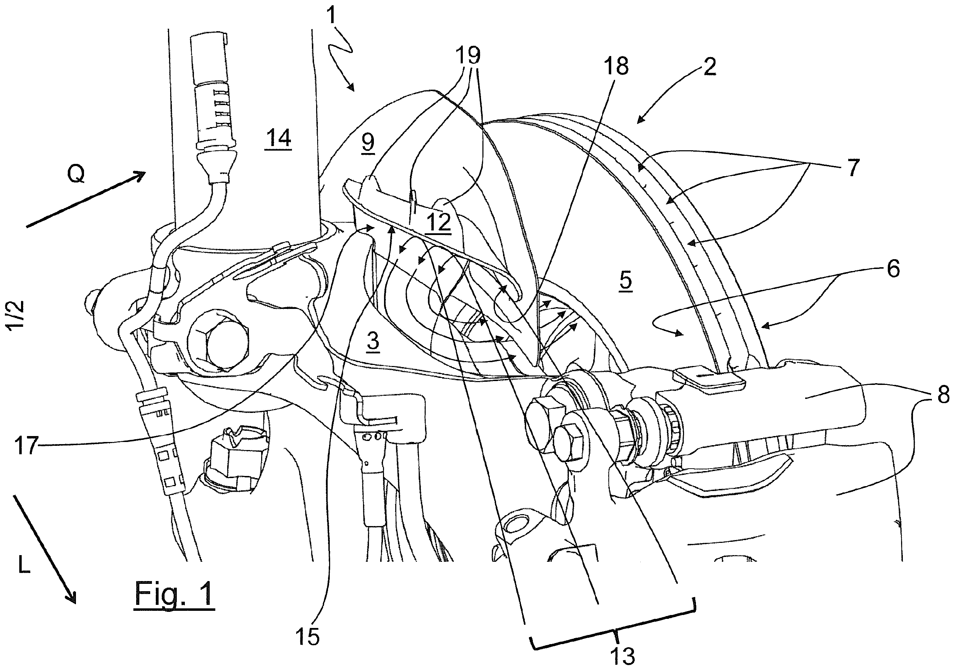

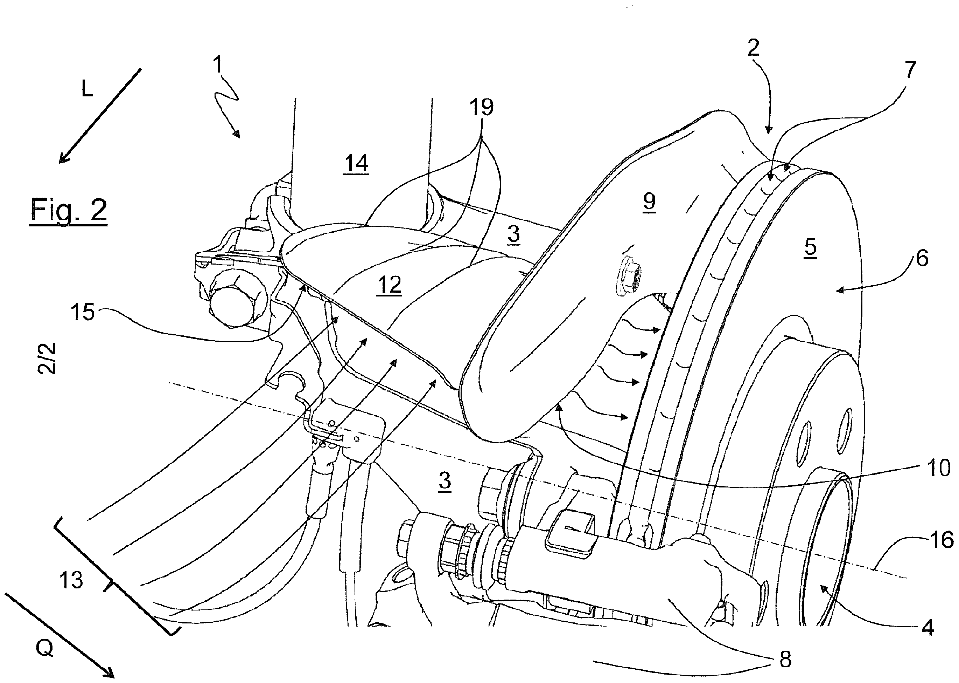

Im Folgenden wird die Erfindung anhand eines bevorzugten Ausführungsbeispiels weiter erläutert, wobei die Erfindung dazu in den beigefügten Zeichnungen schematisch dargestellt ist. **Fig. 1** zeigt in perspektivischer Darstellung aus einer Ansicht schräg von links vorne ein Ausführungsbeispiel einer erfindungsgemäßen Kühlluftführung für eine Reibbelagbremse eines Personenkraftwagens (PKW) und **Fig. 2** die erfindungsgemäße Kühlluftführung aus Fig. 1 in perspektivischer Darstellung aus einer Ansicht schräg von rechts vorne. Erfindungswesentlich können dabei sämtliche näher beschriebenen Merkmale sein.

Dabei zeigen die Fig. 1 und 2 ein Ausführungsbeispiel einer erfindungsgemäßen Kühlluftführung 1 für eine Reibbelagbremse 2 in Form einer Scheibenbremse 2 in einem funktionsgemäßen Einbauzustand auf einer linken Seite einer als Federbeinachse ausgebildeten Vorderachse eines PKW. Die Vorderachse weist ein Federbein 14 auf, das mit seinem unteren Ende an einem Radträger 3 gelagert ist bzw. sich am Radträger 3 abstützt, wobei der Radträger 3 in dem funktionsgemäßen Einbauzustand über das Federbein 14 sowie mehrere hier nicht dargestellte Lenker am Fahrzeugaufbau bzw. der Fahrzeugkarosserie angebunden ist. Über eine Radnabe 4 (vgl. Fig. 2) kann ein Rad am Radträger 3 befestigt werden. Die in den Fig. 1 und 2 ausschnittsweise gezeigte Federbeinachse ist als lenkbare Achse ausgebildet, d.h. der Radträger 3, der in diesem Fall auch als Schwenklager 3 bezeichnet werden kann, ist um eine sogenannte Spreizachse schwenkbar, um eine Lenkbewegung eines am Radträger 3 befestigten Rades zu ermöglichen, d.h. einen Radeinschlag.

Bei dem in den Fig. 1 und 2 dargestellten Ausführungsbeispiel der erfindungsgemäßen Kühlluftführung 1 weist die Reibbelagbremse 2, d.h. die Scheibenbremse 2, als Bremskörper 5 eine innenbelüftete Bremsscheibe 5 mit in diesem Fall radial von innen nach außen verlaufenden Kühlluftkanälen 7 auf, welche zwischen den Reibflächen 6 innerhalb eines Reibrings der Bremsscheibe 5 angeordnet sind und mit deren Hilfe Kühlluft zwischen den Reibflächen 6 von innen radial nach außen geführt werden kann. Zum Aufbringen einer erforderlichen Bremskraft umfasst die Scheibenbremse 2 einen Bremssattel 8 mit hier nicht erkennbar dargestellten, im Bremssattel 8 gelagerten Reibbelägen bzw. Bremsbelägen, die mittels eines hier ebenfalls nicht erkennbar dargestellten Aktuators an die Reibflächen 6 gepresst bzw. angedrückt werden können.

Neben der Bremsscheibe 5 und dem Bremssattel 8 weist die Scheibenbremse 2 ferner eine Bremsenabdeckung 9 auf, die zum einen zum Schutz vor Verschmutzung der Bremsscheibe 5 dient und insbesondere die Reibflächen 6 sowie die Reibbeläge vor Verschmutzungen schützt. Zum anderen dient die Bremsenabdeckung 9 als Luftleiteinrichtung zur Kühlluftführung und bildet eine erste Luftleiteinrichtung 9 einer erfindungsgemäßen Kühlluftführung 1.

Die Bremsenabdeckung 9, d.h. die erste Luftleiteinrichtung 9, sowie der Bremssattel 8 sind dabei ortsfest zum Radträger 3 angebunden, wobei bei diesem Ausführungsbeispiel die erste Luftleiteinrichtung 9 fest am Radträger 3 angebunden ist. Die Bremsscheibe 5 ist an einer am Radträger 3 angebundenen Radnabe 4 (vgl. Fig. 2) befestigt, so dass die Bremsscheibe 5 nur einer Rotationsbewegung des Rades folgen kann, d.h. sich zwar mit dem Rad mit drehen kann, aber bei einem Ein- bzw. Ausfederungsvorgang dem Radträger 3 folgt.

Die erfindungsgemäße Kühlluftführung 1 umfasst neben der Bremsenabdeckung 9, welche die erste Luftleiteinrichtung 9 der erfindungsgemäßen Kühlluftführung 1 bildet, eine zweite Luftleiteinrichtung 12, welche ebenfalls ortsfest zum Radträger 3 und erfindungsgemäß auch am Radträger 3 befestigt ist. Durch die ebenfalls ortsfeste Anbindung der zweiten Luftleiteinrichtung 12 zum bzw. am Radträger ist die zweite Luftleiteinrichtung 12 somit auch ortsfest zur Bremsenabdeckung 9 bzw. zur ersten Luftleiteinrichtung 9 angeordnet. Dabei ist die zweite Luftleiteinrichtung 12 auf einer vom Bremskörper 5 bzw. der Bremsscheibe 5 abgewandten Seite der Bremsenabdeckung 9 zwischen der Bremsenabdeckung 9 und dem Federbein 14 angeordnet, d.h. auf einer Innenseite der Bremsenabdeckung 9 bzw. auf der vom Bremskörper nach fahrzeuginnen abgewandten Seite.

Die zweite Luftleiteinrichtung 12 ist derart ausgebildet, dass von vorne einströmende Kühlluft 13, bezogen auf eine Fahrzeuglängsrichtung L, mithilfe der zweiten Luftleiteinrichtung 12 zur ersten Luftleiteinrichtung 9 hin geleitet wird, d.h. zur Bremsenabdeckung 9, und von dort durch Zusammenwirken der ersten Luftleiteinrichtung 9 mit der zweiten Luftleiteinrichtung 12 zur Bremsscheibe 5 geführt wird.

Die zweite Luftleiteinrichtung 12 der in den Fig. 1 und 2 dargestellten, erfindungsgemäße Kühlluftführung 1 weist dazu eine schaufelförmig bzw. C-förmig ausgebildete Haupt-Luftleitfläche 17 auf, welche eine Innenseite der zweiten Luftleiteinrichtung 12 bildet bzw. eine der Kühlluftströmung 13 zugewandte Fläche.

Die zweite Luftleiteinrichtung 12 bzw. die Haupt-Luftleitfläche 17 erstreckt sich bei dem dargestellten Ausführungsbeispiel dabei fast von der Bremsenabdeckung 9 im Wesentlichen in einer Fahrzeugquerrichtung Q in Richtung Federbein 14 und bogen- oder schaufelförmig bzw. C-förmig in Fahrzeuglängsrichtung L sektorförmig nach hinten in einem Abstand um eine Radachse 16 herum. Die schaufelförmige bzw. C-förmige Ausgestaltung der Haupt-Luftleitfläche 17 bewirkt, dass Kühlluft 13 in Fahrzeuglängsrichtung L nicht ungehindert nach hinten strömt, sondern vor und oberhalb der Radachse 16 "gesammelt" wird, von dort wenigstens teilweise nach hinten und unten oberhalb von der Radachse 16 um diese herumgeleitet wird und anschließend zur ersten Luftleiteinrichtung 9 in Richtung fahrzeugaußen effizient umgelenkt wird.

Die zweite Luftleiteinrichtung 12 bzw. die Haupt-Luftleitfläche 17 weist eine vordere Anströmkante 15 auf, an welcher von vorne einströmende bzw. anströmende Kühlluft 13 zuerst mit der Haupt-Luftleitfläche 17 in Kontakt kommt. Bei diesem Ausführungsbeispiel befindet sich die vordere Anströmkante 15 oberhalb der Radachse 16 und in Fahrzeuglängsrichtung L weit vor der Radachse 16, d.h. die zweite Luftleiteinrichtung 12 bzw. die Haupt-Luftleitfläche 17 erstreckt sich von oberhalb und weit vor der Radachse 16 C-bzw. bogenförmig sektorförmig, d.h. über einen Sektor in Umfangsrichtung um die Radachse 16, nach hinten um die Radachse 16 herum. Bei diesem Ausführungsbeispiel ist die zweite Luftleitführung 12 derart angeordnet, dass die Kühlluft 13 unmittelbar ca. 135 mm oberhalb und ca. 100 mm vor der Radachse 16 auf die Haupt-Luftleitfläche 17 trifft. Die vordere Anströmkante 15 kann sich in Fahrzeuglängsrichtung L aber auch auf Höhe der Radachse 16 oder hinter der Radachse 16 befinden.

Die zweite Luftleiteinrichtung 12, insbesondere die Haupt-Luftleitfläche 17 mit der Anströmkante 15 ist bei diesem Ausführungsbeispiel in vorteilhafter Weise so ausgebildet und angeordnet, dass die Kühlluft 13 die Haupt-Luftleitfläche 17 bzw. die vordere Anströmkante 15 tangential anströmt. Um möglichst viel Kühlluft "sammeln" zu können und um eine verbesserte Unterströmung der Bremsenabdeckung 9 zu erreichen, insbesondere eine effiziente und wenig verlustbehaftete Umlenkung der Kühlluft 13 sowie einen größeren Kühlluftmassenstrom unterhalb der ersten Luftleiteinrichtung 9 hindurch, verläuft die vordere Anströmkante 15 außerdem in Fahrzeugquerrichtung Q nach fahrzeugaußen leicht nach unten geneigt.

Für eine verbesserte Strömungsumlenkung bzw. für eine effizientere Kühlluftführung mit geringeren Abströmungen, d.h. für eine bessere "Abdichtung" zwischen der zweiten Luftleiteinrichtung 12 und der ersten Luftleiteinrichtung 9 weist die zweite Luftleiteinrichtung 12 bei der dargestellten, erfindungsgemäßen Kühlluftführung 1 zusätzlich an ihrer der Bremsenabdeckung 9 zugewandten Seite der Haupt-Luftleitfläche 17 angrenzend an die Haupt-Luftleitfläche 17 eine sich von der schaufelförmigen Haupt-Luftleitfläche 17 radial nach innen und leicht schräg nach fahrzeugaußen erstreckende, durch einen Rand bzw. Flansch gebildete Neben-Luftleitfläche 18 auf, welche sich ebenfalls fast bis an die Bremsenabdeckung 9 heran erstreckt und den Effekt, dass die einströmende Kühlluft 13 in Richtung der ersten Luftleiteinrichtung 9 umgelenkt wird, noch verstärkt.

Durch eine entsprechende Ausgestaltung der zweiten Luftleiteinrichtung 12, insbesondere durch eine entsprechende Krümmung der Haupt-Luftleitfläche 17 und eine entsprechende Ausbildung der Neben-Luftleitfläche 18 kann eine effiziente Kühlluftführung erreicht werden. Um zu verhindern, dass Kühlluft 13 zwischen der zweiten Luftleiteinrichtung 12 und der Bremsenabdeckung 9 nach oben strömt, erstreckt sich die zweite Luftleiteinrichtung 12 in Fahrzeugquerrichtung Q mit der Haupt-Luftleitfläche 17 fast bis an die Bremsenabdeckung 9 heran. Auf diese Weise kann eine besonders effiziente, wenig verlustbehaftete Kühlluftführung erreicht werden.

Um zu verhindern, dass die zweite Luftleiteinrichtung 12 zum Schwingen angeregt wird, beispielsweise durch die Anströmung der Kühlluft 13, weist die zweite Luftleiteinrichtung 12 bei diesem Ausführungsbeispiel auf ihrer Rückseite, d.h. auf einer von der Haupt-Luftleitfläche gegenüberliegenden Seite bzw. Fläche, drei in Anströmrichtung bzw. in Strömungsrichtung der Kühlluft 13 verlaufende Verstärkungsrippen 19 zur Versteifung auf.

Für eine effiziente Kühlluftführung wirken bei diesem Ausführungsbeispiel einer erfindungsgemäßen Kühlluftführung 1 die erste und die zweite Luftleiteinrichtung 9 und 12 derart zusammen, dass die von vorne eingeströmte Kühlluft 13, nachdem sie von der zweiten Luftleiteinrichtung 12 zur ersten Luftleiteinrichtung 9 geleitet worden ist, von einer Innenseite der Bremsenabdeckung 9, d.h. von einer von der Bremsscheibe 5 abgewandten Seite, unterhalb einer Unterkante 10 der Bremsenabdeckung 9 im Wesentlichen in Fahrzeugquerrichtung Q axial nach fahrzeugaußen in Richtung einer Radachse 16 zur Bremsscheibe 5 geführt bzw. geleitet wird, bezogen auf den funktionsgemäßen Einbauzustand in einem Fahrzeug. Bei diesem Ausführungsbeispiel ist die Bremsenabdeckung 9, d.h. die erste Luftleiteinrichtung 9, dabei derart ausgestaltet, dass Kühlluft 13 sowohl außen an die Reibflächen 6 der Bremsscheibe 5 geleitet wird, als auch insbesondere verstärkt innen in die Kühlluftkanäle 7, wobei die Kühlluft 13 durch hier nicht erkennbar dargestellte, weitere Maßnahmen in die Kühlluftkanäle 7 eingeleitet wird. Dadurch wird die Bremsscheibe 5 insbesondere verstärkt von innen mit Kühlluft 13 umströmt, so dass insbesondere die Kühlung der Bremsscheibe 5 von innen gesteigert werden kann.

Die Bremsenabdeckung 9 ist bei diesem Ausführungsbeispiel ein durch Tiefziehen hergestelltes Aluminiumblechteil und die zweite Luftleiteinrichtung 12 ein im Spritzgußverfahren hergestelltes Kunststoffteil. Der Werkstoff der Luftleiteinrichtungen ist vorzugsweise korrosionsbeständig und kann insbesondere den im Fahrbetrieb auftretenden Temperaturen, insbesondere den auftretenden Temperaturschwankungen, standhalten. Die beiden Luftleiteinrichtungen können dabei sowohl aus dem gleichen Werkstoff sein als auch unterschiedliche Werkstoffe aufweisen. Ferner müssen die Luftleiteinrichtungen jeweils auch nicht nur aus einem Werkstoff bestehen, sondern können mehrere Werkstoffe aufweisen und/oder aus mehreren Einzelteilen mit unterschiedlichen Werkstoffen zusammengesetzt sein. Sind die Anforderungen an die Temperaturbeständigkeit nicht zu hoch, kann es vorteilhaft sein, Polypropylen einzusetzen, insbesondere für die zweite Luftleiteinrichtung 12. In einigen Fällen kann auch die Verwendung von faserverstärktem Kunststoff, vorzugsweise von CFK oder GFK, als Werkstoff für wenigstens eine der beiden Luftleiteinrichtungen 9 und 12 vorteilhaft sein. Bei höheren Anforderungen an die Temperaturbeständigkeit sind Metallblechteile als Luftleiteinrichtungen 9 und 12 besser geeignet, vorzugsweise Aluminium- oder Stahlblechteile oder dergleichen, die insbesondere durch Tiefziehen hergestellt wurden.

Bei diesem Ausführungsbeispiel einer erfindungsgemäßen Kühlluftführung 1 ist die zweite Luftleiteinrichtung 12 mittels einer ebenfalls nicht erkennbar dargestellten, selbstsichernden Bolzensteckverbindung am Radträger 3 befestigt, wobei die zweite Luftleiteinrichtung 12 dazu einen angeformten Bolzen mit Widerhaken aufweist, der in eine Ausnehmung in Form einer Durchgangsbohrung am Radträger 3 gesteckt ist bzw. durch diese hindurch und sich über seine Widerhaken selbst sichert. Durch die einfache Anbindung am Radträger 3 ist nur eine entsprechende Ausnehmung bzw. eine Durchgangsbohrung im Radträger 3 erforderlich, in welcher die zweite Luftleiteinrichtung 12 bzw. deren Bolzen eingesteckt wird. Diese Ausnehmung kann bei Bedarf in bestimmten Fällen auch noch nachträglich eingebracht werden, so dass bei Bedarf ein Fahrzeug nachträglich mit einer zweiten Luftleiteinrichtung ausgerüstet werden kann.

Je nach Werkstoff der Luftleiteinrichtungen können andere Verbindungsarten zur Befestigung der Luftleiteinrichtungen vorteilhaft sein. Insbesondere bei Luftleiteinrichtungen aus herkömmlichem Kunststoff, CFK oder GFK kann eine Klebeverbindung zur Befestigung geeigneter sein als eine gesicherte Bolzensteckverbindung, wobei die Verbindungsart bevorzugt derart gewählt ist, dass sie korrosionsbeständig ist und insbesondere den Temperaturanforderungen genügt.

Bei diesem Ausführungsbeispiel sind am Radträger 3 und am Federbein 14 Kabel und Leitungen befestigt. In einigen Fällen kann es vorteilhaft sein, diese an der ersten Luftleiteinrichtung 9 und/oder der zweiten Luftleiteinrichtung 12 zu befestigen und/oder zu führen.

Selbstverständlich ist eine Vielzahl an Abwandlungen, insbesondere von konstruktiven Abwandlungen, zu dem erläuterten Ausführungsbeispiel möglich, ohne den Inhalt der Patentansprüche zu verlassen.

### Bezugszeichenliste:

- 1: Kühlluftführung
- 2: Scheibenbremse
- 3: Radträger
- 4: Radnabe
- 5: Bremsscheibe
- 6: Reibfläche
- 7: Kühlluftkanal
- 8: Bremssattel
- 9: Bremsenabdeckung; erste Luftleiteinrichtung
- 10: innere Kante der Bremsenabdeckung in radialer Richtung
- 12: zweite Luftleiteinrichtung
- 13: von vorne einströmende Kühlluft
- 14: Federbein
- 15: Anströmkante der zweiten Luftleiteinrichtung
- 16: Radachse
- 17: Haupt-Luftleitfläche
- 18: Neben-Luftleitfläche
- 19: Versteifungsrippe
- L: Fahrzeuglängsrichtung
- Q: Fahrzeugquerrichtung

## Patentansprüche

1. Kühlluftführung (1) für eine Reibbelagbremse (2) eines Kraftfahrzeugs, das einen Radträger (3) und eine am Radträger (3) angebundene Radnabe (4) aufweist, wobei die Reibbelagbremse (2) einen an der Radnabe (4) des Kraftfahrzeugs angebundenen Bremskörper (5) mit Reibflächen (6), insbesondere eine Bremsscheibe (5), und eine auf der Innenseite des Bremskörpers (5) angeordnete und ortsfest zum Radträger (3) befestigte Bremsenabdeckung (9) aufweist, wobei die Bremsenabdeckung (9) eine erste Luftleiteinrichtung (9) der Kühlluftführung (1) bildet, und wobei die Kühlluftführung (1) eine zweite Luftleiteinrichtung (12) aufweist, die auf einer von dem Bremskörper (5) abgewandten Seite der Bremsenabdeckung (9) angeordnet ist und ortsfest zur Bremsenabdeckung (9) befestigt ist, wobei die zweite Luftleiteinrichtung (12) derart ausgebildet ist, dass von vorne einströmende Kühlluft (13), bezogen auf eine Fahrzeuglängsrichtung (L), durch die zweite Luftleiteinrichtung (12) nach fahrzeugaußen zur ersten Luftleiteinrichtung (9) und von dort durch Zusammenwirken der ersten Luftleiteinrichtung (9) mit der zweiten Luftleiteinrichtung (12) weiter nach fahrzeugaußen zum Bremskörper (5) geleitet wird,
**dadurch gekennzeichnet, dass** die zweite Luftleiteinrichtung (12) am Radträger (3) befestigt ist.

2. Kühlluftführung (1) nach Anspruch 1, **dadurch gekennzeichnet, dass** sich die zweite Luftleiteinrichtung (12) in Fahrzeugquerrichtung (Q) in Richtung fahrzeugaußen bis nah an die Bremsenabdeckung (9) heran erstreckt, wobei die zweite Luftleiteinrichtung (12) sich dabei vorzugsweise so nah an die Bremsenabdeckung (9) heran erstreckt, dass möglichst keine Kühlluft (13) zwischen der zweiten Luftleiteinrichtung (12) und der Bremsenabdeckung (9) entlang der Bremsenabdeckung (9) radial nach außen strömt.

3. Kühlluftführung (1) nach Anspruch 1 oder 2, **dadurch gekennzeichnet, dass** die zweite Luftleiteinrichtung (12) eine schaufel- und oder bogenförmige Haupt-Luftleitfläche (17) aufweist, die sich zum einen in Fahrzeugquerrichtung (Q) und zum anderen zumindest teilweise bogenförmig, insbesondere im Wesentlichen C-förmig, wenigstens im Bereich eines Umfangssektors um eine Radachse (16) herum erstreckt.

4. Kühlluftführung (1) nach einem der vorhergehenden Ansprüche,
**dadurch gekennzeichnet, dass** die zweite Luftleiteinrichtung (12) derart angeordnet ist, dass sich eine vordere Anströmkante (15) der Haupt-Luftleitfläche (17), bezogen auf einen funktionsgemäßen montierten Zustand in einem Kraftfahrzeug, oberhalb der Radachse (16) befindet, vorzugsweise oberhalb der Radachse (16) und vor der Radachse (16).

5. Kühlluftführung (1) nach einem der vorhergehenden Ansprüche,
**dadurch gekennzeichnet, dass** die zweite Luftleiteinrichtung (12) wenigstens eine an die Haupt-Luftleitfläche (17) angrenzende Neben-Luftleitfläche (18) aufweist, wobei die zweite Luftleiteinrichtung (12) vorzugsweise an einer der Bremsenabdeckung (9) zugewandten Seite der Haupt-Luftleitfläche (17) eine angrenzende Neben-Luftleitfläche (18) aufweist.

6. Kühlluftführung (1) nach Anspruch 5, **dadurch gekennzeichnet, dass** die Neben-Leitfläche (18) durch einen sich zumindest teilweise radial nach innen erstreckenden Flansch oder Rand gebildet wird, vorzugsweise einen sich schräg radial nach innen und axial von der Haupt-Luftleitfläche (17) weg erstreckenden Flansch oder Rand.

7. Kühlluftführung (1) nach Anspruch 6, **dadurch gekennzeichnet, dass** entweder der die zweite Luftleiteinrichtung aufnehmende bzw. tragende Radträger (3), oder die zweite Luftleiteinrichtung (12) wenigstens eine Ausnehmung zur Befestigung aufweist, vorzugsweise eine Durchgangsbohrung, und die zweite Luftleiteinrichtung (12) oder der Radträger wenigstens ein entsprechendes Befestigungsmittel, das korrespondierend zu der Ausnehmung ausgebildet ist.

8. Kühlluftführung (1) nach einem der vorhergehenden Ansprüche,
**dadurch gekennzeichnet, dass** die zweite Luftleiteinrichtung (12) an ihrer Rückseite wenigstens ein Versteifungselement (19) aufweist, wobei das Versteifungselement (19) vorzugsweise eine Versteifungsrippe (19) ist, insbesondere eine zumindest teilweise in Strömungsrichtung verlaufende Versteifungsrippe (19).

9. Kühlluftführung (1) nach einem der vorhergehenden Ansprüche,
**dadurch gekennzeichnet, dass** die zweite Luftleiteinrichtung (12) zur Befestigung und/oder Führung von Kabeln oder dergleichen ausgebildet ist.

## Claims

1. A cooling air guide (1) for a friction lining brake (2) of a motor vehicle, which motor vehicle has a wheel carrier (3) and a wheel hub (4) attached to the wheel carrier (3), wherein the friction lining brake (2) has a brake body (5) having friction surfaces (6), in particular a brake disc (5), which brake body is attached to the wheel hub (4) of the motor vehicle, and a brake cover (9) arranged on the inside of the brake body (5) and fastened in a stationary fashion to the wheel carrier (3), wherein the brake cover (9) forms a first air guide device (9) of the cooling air guide (1), and wherein the cooling air guide (1) has a second air guide device (12), which is arranged on a side of the brake cover (9) facing away from the brake body (5) and is fastened in a stationary fashion to the brake cover (9), wherein the second air guide device (12) is configured in such a way that cooling air (13) flowing in from the front, based on a vehicle longitudinal direction (L), is directed through the second air guide device (12) toward the vehicle exterior to the first air guide device (9), and from there, by cooperation of the first air guide device (9) with the second air guide device (12), is directed further toward the vehicle exterior to the brake body (5), **characterised in that** the second air guide device (12) is fastened to the wheel carrier (3).

2. A cooling air guide (1) according to claim 1, **characterised in that** the second air guide device (12) extends in the vehicle transverse direction (Q) in the direction of the vehicle exterior until close to the brake cover (9), wherein the second air guide device (12) preferably extends so close to the brake cover (9) that, to the greatest possible extent, no cooling air (13) flows radially outwardly between the second air guide device (12) and the brake cover (9).

3. A cooling air guide (1) according to claim 1 or 2, **characterised in that** the second air guide device (12) has a scoop-shaped and/or arc-shaped primary air guide surface (17), which extends on the one hand in the vehicle transverse direction (Q) and on the other hand at least partially in an arc shape, especially substantially in a C shape, about a wheel axle (16) at least in the region of a circumferential sector.

4. A cooling air guide (1) according to one of the preceding claims, **characterised in that** the second air guide device (12) is arranged in such a way that a front leading edge (15) of the primary air guide surface (17), based on a functional, installed position in a motor vehicle, is situated above the wheel axle (16), preferably above the wheel axle (16) and in front of the wheel axle (16) .

5. A cooling air guide (1) according to one of the preceding claims, **characterised in that** the second air guide device (12) has at least one secondary air guide surface (18) adjacent to the primary air guide surface (17), wherein the second air guide device (12) has an adjacent secondary air guide surface (18) preferably on a side of the primary air guide surface (17) facing the brake cover (9).

6. A cooling air guide (1) according to claim 5, **characterised in that** the secondary guide surface (18) is formed by a flange or edge extending radially inwardly at least in part, preferably a flange or edge extending radially inwardly at an incline and axially away from the primary air guide surface (17).

7. A cooling air guide (1) according to claim 6, **characterised in that** either the wheel carrier (3) receiving or supporting the second air guide device, or the second air guide device (12) has at least one recess for fastening, preferably a through-bore, and the second air guide device (12) or the wheel carrier has at least one correlating fastening means, which is configured in a manner corresponding to the recess.

8. A cooling air guide (1) according to one of the preceding claims, **characterised in that** the second air guide device (12) has at least one stiffening element (19) on its rear side, wherein the stiffening element (19) is preferably a stiffening rib (19), in particular a stiffening rib (19) running at least in part in the flow direction.

9. A cooling air guide (1) according to one of the preceding claims, **characterised in that** the second air guide device (12) is configured to fasten and/or guide cables or the like.

## Revendications

1. Guide d'air de refroidissement (1) destiné à un frein à garniture de friction (2) d'un véhicule automobile qui comporte un support de roue (3) et un moyeu de roue (4) relié au support de roue (3), le frein à garniture de friction (2) comprenant un corps de frein (5) relié au moyeu de roue (4) du véhicule automobile équipé de surfaces de friction (6), en particulier un disque de frein (5) et un revêtement de freinage (9) installé sur la face interne du corps de frein (5) et fixé solidairement au support de roue (3), le revêtement de freinage (9) formant un premier dispositif de guidage d'air (9) du guide d'air de refroidissement (1) et ce guide d'air de refroidissement (1) comprenant un second dispositif de guidage d'air (12) qui est installé sur le côté du revêtement de freinage (9) situé à l'opposé du corps de frein (5), et est fixé solidairement au revêtement de freinage (9), le second dispositif de guidage d'air (12) étant réalisé de sorte que de l'air de refroidissement (13) entrant par l'avant par rapport à la direction longitudinale (L) du véhicule soit guidé par le second dispositif de guidage d'air (12) en direction de l'extérieur du véhicule vers le premier dispositif de guidage d'air (9) et à partir de là, par une coopération du premier dispositif de guidage d'air (9) et du second dispositif de guidage d'air (12) plus en direction de l'extérieur du véhicule vers le corps de frein (5),
**caractérisé en ce que**
le second dispositif de guidage d'air (12) est fixé sur le support de roue (3).

2. Guide d'air de refroidissement (1) conforme à la revendication 1,
**caractérisé en ce que**
le second dispositif de guidage d'air (12) s'étend, dans la direction transversale (Q) du véhicule en direction de l'extérieur du véhicule jusqu'à proximité du revêtement de freinage (9), le second dispositif de guidage d'air (12) s'étendant, de préférence à une proximité du revêtement de freinage (9) telle qu'aussi peu d'air de refroidissement (13) que possible ne s'écoule radialement vers l'extérieur entre le second dispositif de guidage d'air (12) et le revêtement de freinage (9) le long de ce revêtement de freinage (9).

3. Guide d'air de refroidissement (1) conforme à la revendication 1 ou 2,
**caractérisé en ce que**
le second dispositif de guidage d'air (12) comporte une surface de guidage d'air principale (17) en forme d'aube ou en forme d'arc qui s'étend d'une part dans la direction transversale (Q) du véhicule et d'autre part, au moins partiellement en forme d'arc, en particulier essentiellement en forme de C, au moins dans la zone d'un secteur périphérique autour d'un essieu de roue (16).

4. Guide d'air de refroidissement (1) conforme à l'une des revendications précédentes,
**caractérisé en ce que**
le second dispositif de guidage d'air (12) est installé de sorte que le bord d'attaque avant (15) de la surface de guidage d'air principale (17) soit situé, par rapport à l'état monté fonctionnel dans un véhicule, au-dessus de l'essieu de roue (16), de préférence au-dessus de l'essieu de roue (16) et à l'avant de cet essieu de roue (16).

5. Guide d'air de refroidissement (1) conforme à l'une des revendications précédentes,
**caractérisé en ce que**
le second dispositif de guidage d'air (12) comporte au moins une surface de guidage d'air auxiliaire (18) voisine de la surface de guidage d'air principale (17), et le second dispositif de guidage d'air (12) comporte, de préférence, sur le côté de la surface de guidage d'air principale (17) tourné vers le revêtement de freinage (9) une surface de guidage d'air auxiliaire voisine (18).

6. Guide d'air de refroidissement (1) conforme à la revendication 5,
**caractérisé en ce que**
la surface de guidage auxiliaire (18) est formée par un flanc ou un bord s'étendant au moins partiellement radialement vers l'intérieur, et de préférence par un flanc ou un bord s'étendant obliquement radialement vers l'intérieur et axialement en s'éloignant de la surface de guidage d'air principale (17).

7. Guide d'air de refroidissement (1) conforme à la revendication 6,
**caractérisé en ce que**
le support de roue (3) recevant ou portant le second dispositif de guidage d'air ou le second dispositif de guidage d'air (12) comporte au moins un évidement de fixation, de préférence un perçage traversant et le second dispositif de guidage d'air (12) ou le support de roue comporte au moins un moyen de fixation correspondant qui est réalisé en conformité avec l'évidement.

8. Guide d'air de refroidissement (1) conforme à l'une des revendications précédentes,
**caractérisé en ce que**
le second dispositif de guidage (12) comporte, sur sa face arrière, au moins un élément de renfort (19), cet élément de renfort (19) étant de préférence une nervure de renfort (19), et en particulier, une nervure de renfort (19) s'étendant au moins partiellement dans la direction d'écoulement.

9. Guide d'air de refroidissement (1) conforme à l'une des revendications précédentes,
**caractérisé en ce que**
le second dispositif de guidage d'air (12) est réalisé pour permettre la fixation et/ou le guidage de câbles ou similaire.
